# EUROPÄISCHE PATENTSCHRIFT

(11) **EP 4 658 474 B1**
(45) Veröffentlichungstag und Bekanntmachung des Hinweises auf die Patenterteilung: **09.12.2026**
(21) Anmeldenummer: 24700856.8
(22) Anmeldetag: 09.01.2024
(51) Int. Cl.: B29C 49/42, B29C 49/48, B65D 1/02, B29C 49/06, B29C 49/36, B29L 31/00

(54) **KUNSTSTOFFBEHÄLTER, FORMWERKZEUG, VORRICHTUNG UMFASSEND DAS FORMWERKZEUG UND VERFAHREN ZUM HERSTELLEN UND BEFÜLLEN EINES KUNSTSTOFFBEHÄLTERS**
PLASTICS CONTAINER, MOULD, DEVICE COMPRISING THE MOULD, AND METHOD FOR PRODUCING AND FILLING A PLASTICS CONTAINER
RÉCIPIENT EN MATIÈRE PLASTIQUE, MOULE, DISPOSITIF COMPRENANT LE MOULE ET MÉTHODE DE FABRICATION ET DE REMPLISSAGE D'UN RÉCIPIENT EN MATIÈRE PLASTIQUE

(30) Priorität: 30.01.2023 DE 102023102122
(43) Veröffentlichungstag der Anmeldung: 10.12.2025
(73) Patentinhaber: KHS GmbH, 44143 Dortmund (DE)
(72) Erfinder: KIUPEL, Sebastian, 22926 Ahrensburg (DE); BOLDT, Thomas, 22307 Hamburg (DE); ROMMEL, Christian, 23617 Stockelsdorf (DE); RITTER, Michael, 23881 Alt-Mölln (DE)
(86) Internationale Anmeldenummer: PCT/EP2024/050325
(87) Internationale Veröffentlichungsnummer: WO 2024/160493

(56) Entgegenhaltungen:
- EP-B1- 2 129 508
- US-A- 5 529 196
- US-A1- 2017 239 846
- US-A1- 2018 265 242
- US-A1- 2020 307 888
- US-B2- 6 827 228

## Beschreibung

Die Erfindung betrifft einen Kunststoffbehälter, ein Formwerkzeug, eine Vorrichtung umfassend das Formwerkzeug und ein Verfahren zum Herstellen und Befüllen eines Kunststoffbehälters.

Die Herstellung von Kunststoffbehältern kann beispielsweise mit Streckblasverfahren durchgeführt werden. Dazu werden Vorformlinge für Behälter aus Kunststoff in Formwerkzeuge eingelegt, in denen die Vorformlinge zu den Behältern geformt werden können. Die Vorformlinge werden in den Formwerkzeugen mit einem unter hohen Blasdruck stehenden Gas befüllt. Durch den Blasdruck werden die Vorformlinge in axialer und radialer Richtung gereckt, bis sie die durch das Formwerkzeug vorgegebene Form des Behälters angenommen haben. Die Bereitstellung des hohen Blasdrucks benötigt viel Energie.

Aus DE 10 2015 208 677 A1 ist zur Verringerung des benötigten Blasdrucks bekannt, einen Boden einer Blasform mit einem Kanal zum Entlüften der Blasform bereitzustellen, der geöffnet und geschlossen werden kann. Beim Einleiten des Gases in den Vorformling kann der Kanal geöffnet werden, um die von dem sich verformenden Vorformling verdrängte Luft in der Blasform schnell abzuleiten. Dies verringert den Widerstand, den das Gas beim Verformen des Vorformlings erfährt, so dass ein verringerter Blasdruck zum Formen des Behälters verwendet werden kann und Energie eingespart werden kann.

US 2020/0307888 A1 beschreibt einen Kunststoffbehälter, der heiß befüllbar ist. Der Behälter umfasst einen blasgeformten Körper mit einem Hals und einem Boden, der einen mittleren Abschnitt und mehrere voneinander beabstandete radiale Segmente aufweist. Mindestens ein Abschnitt jedes Segments verjüngt sich von einer Außenseite zu einer Innenseite. Es werden weiter Behältersysteme und Verfahren zur Herstellung von Behältern beschrieben.

Weiter ist aus US 2017/0239846 A1 ein Vorformling aus einem Kunststoffmaterial zur Herstellung eines Behälters durch Blasformen oder Streckblasformen bekannt, wobei der Vorformling eine sich entlang einer Hauptachse erstreckende Seitenwand, einen offenen Hals und einen im Wesentlichen halbkugelförmigen geschlossenen Boden mit einer Dicke aufweist, die zumindest lokal um die Hauptachse herum variiert. EP2129508A2 beschreibt ein Verfahren und eine Vorrichtung zur Blasformung von Behältern. Ein Vorformling aus einem thermoplastischen Material wird zunächst entlang eines Transportweges im Bereich einer Heizstrecke einer thermischen Konditionierung unterworfen. Anschließend wird der Vorformling innerhalb einer Blasform durch Blasdruckeinwirkung in den Behälter umgeformt. Der Behälter wird während der Blasdruckeinwirkung mit einer Ist-Kontur geblasen, die von einer Soll-Kontur des Behälters derart abweicht, dass die Ist-Kontur des Behälters nach einer Entformung und der Durchführung eines Rückschrumpfens im Wesentlichen die Soll-Kontur annimmt. Dies wird dadurch erreicht, dass die Blasform eine Innenkontur aufweist, die von einem Sollwertverlauf der Außenkontur des Behälters abweicht.

Aus US 5529196 A ist ein einteiliger Kunststoffbehälter für kohlensäurehaltige Getränke bekannt, der über eine Basisstruktur mit Füßen verfügt. Der obere Teil der Basisstruktur umfasst hohle Vorsprünge, zwischen denen relativ steife Riemenformationen ausgebildet sind. Ein verformbarer offener Bereich am oberen Ende der Riemenformationen lässt sich leicht verformen und dehnt sich auf kontrollierte Weise aus, wenn der Behälter unter Druck gesetzt wird. Die Auswärtsbewegung des offenen Bereichs bewirkt eine Auswärtsbewegung der oberen Enden der Riemenformationen, die sich dann um die Füße drehen, wodurch sich die unteren Enden der Riemenformationen und der mittlere Bereich der Bodenstruktur nach oben bewegen.

US 2018/0265242 A1 beschreibt einen Behälter aus Kunstharz, der in Form einer Flasche mit einer Öffnung und einem Körper ausgebildet ist und im Körper mit mindestens einer Unterdruckabsorptionsplatte versehen ist. Der Körper hat eine Dichte von 1,3695 g/cm³ oder mehr, und das Verhältnis der Kristallorientierung in Querrichtung zum Gesamtwert der Kristallorientierung in Maschinenrichtung und der Kristallorientierung in Querrichtung im Körper beträgt weniger als 44 %.

Aus US 6827228 B2 ist weiter ein Kunststoffbehälter mit einer Blase bekannt, die in der Wand des Kunststoffbehälters ausgebildet ist, der eine Innenfläche, eine Außenfläche und eine Wandstärke aufweist und zur Aufnahme einer unter Druck stehenden Flüssigkeit, z. B. ein kohlensäurehaltiges Getränk, einschließlich einer integralen Struktur, die aus einer zentralen Kuppel mit einer konvexen Außenfläche gebildet ist, die zur benachbarten Außenfläche hin ausgerichtet und mit einer ringförmigen Mulde verbunden ist, die eine ringförmige konkave Fläche aufweist, die zur benachbarten Außenfläche hin ausgerichtet ist, einem Kegelstumpf, der die Mulde mit der Kuppel verbindet, oder einem Außenring mit gekrümmtem Querschnitt, wobei der Außenring eine ringförmige konkave Oberfläche aufweist, die zum Innenraum hin ausgerichtet ist, und integral mit der die Blase umgebenden Behälterwand ausgebildet ist, wobei die Blase eine Dicke aufweist, die ungefähr der Wanddicke entspricht.

Aufgabe der Erfindung ist es, einen Kunststoffbehälter, ein Formwerkzeug, eine Vorrichtung umfassend das Formwerkzeug und ein Verfahren zum Herstellen und Befüllen eines Kunststoffbehälters bereitzustellen, durch die Herstellung des Kunststoffbehälters vereinfacht und kostengünstig ist.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einem Kunststoffbehälter zum Aufnehmen von gashaltigen Flüssigkeiten, umfassend einen Behälterboden mit mindestens einem Bodenzentrum und mindestens einer Standfußgeometrie, die sich zumindest teilweise um das Bodenzentrum erstreckt, wobei das Bodenzentrum höher als die Standfußgeometrie angeordnet ist, ist erfindungsgemäß vorgesehen, dass in den Behälterboden mindestens eine durch eine Erhöhung eines Innendrucks im Kunststoffbehälter verformbare Funktionsgeometrie zum Verschieben angrenzender Bereiche des Behälterbodens eingebettet ist, die zumindest teilweise zwischen der Standfußgeometrie und dem Bodenzentrum angeordnet ist, wobei der Behälterboden einen unverformten ersten Zustand, in dem die Funktionsgeometrie unverformt ist und die Standfußgeometrie in einem ersten Abstand zum Bodenzentrum angeordnet ist, und einen verformten zweiten Zustand aufweist, in dem die Funktionsgeometrie verformt ist und die Standfußgeometrie in einem zweiten Abstand zum Bodenzentrum angeordnet ist, wobei der zweite Abstand größer als der erste Abstand ist.

Die Erfindung stellt damit einen Kunststoffbehälter mit einem Behälterboden bereit, der durch eine Erhöhung des Innendrucks von einem unverformten Zustand mittels der Funktionsgeometrie kontrolliert in einen verformten Zustand wechseln kann. Der Behälterboden ist dabei aus dem Kunststoffbehälter ausgeformt. Die Verformung des Behälterbodens erfolgt dabei durch die Verformung der Funktionsgeometrie, wobei die Verformung eine Verschiebung der an die Funktionsgeometrie angrenzenden Bereiche des Behälterbodens bewirkt. Die Verformung kann vorzugsweise eine plastische Verformung sein. Weiter kann die Funktionsgeometrie zumindest an die Standfußgeometrie und/oder an das Bodenzentrum angrenzen. Da die Funktionsgeometrie zumindest teilweise zwischen dem Bodenzentrum und der Standfußgeometrie angeordnet ist, wird durch die Verformung der Funktionsgeometrie der Abstand zwischen dem Bodenzentrum und der Standfußgeometrie vergrößert. Die Verformung der Funktionsgeometrie bewirkt dabei eine kontrollierte und beabsichtigte Flächenverschiebung der Standfußgeometrie beim Übergang vom ersten in den zweiten Zustand. Weiter kann sich Funktionsgeometrie beim Übergang vom ersten in den zweiten Zustand zumindest in einer Richtung von dem Bodenzentrum zu der Standfußgeometrie bzw. umgekehrt verbreitern, wobei eine Verformung des Bodenzentrums und der Standfußgeometrie während der Verformung der Funktionsgeometrie vermieden werden kann. Die Funktionsgeometrie kann auch als eine Soll-Verformungsstelle der Bodenform betrachtet werden. Die Standfußgeometrie wird auf Grund der Verformung der Funktionsgeometrie von dem ersten Abstand in den zweiten Abstand zu dem Bodenzentrum angeordnet und kann dabei im Wesentlichen nicht verformt werden. De Innendruck in dem Kunststoffbehälter kann zum Beispiel durch eine gashaltige in den Behälter eingefüllte Flüssigkeit bereitgestellt werden, vorzugsweise durch eine mit Kohlensäure versetzte Flüssigkeit. Der Kunststoffbehälter wird damit durch die Erhöhung des Innendrucks in seine endgültige Form gebracht. D. h., dass der Behälterboden bei der Herstellung des Kunststoffbehälters derart hergestellt wird, dass er in dem ersten Zustand ist. Die Verformung des Behälterbodens von dem ersten Zustand in den zweiten Zustand wird auf Grund der Erfindung nicht durch während der Herstellung des Kunststoffbehälters durchgeführt, sondern während dessen Befüllung mit der gashaltigen Flüssigkeit. Für die Ausformung des Kunststoffbehälters wird damit der Umstand ausgenutzt, dass die Flüssigkeit ebenfalls einen Innendruck in dem Kunststoffbehälter erzeugen kann. Damit kann für die Herstellung des Kunststoffbehälters ein verringerter Blasdruck verwendet werden, so dass der Energieverbrauch verringert ist. Weiter werden für die Verringerung des Energieverbrauchs keine Komponenten an dem zugrundeliegenden Formwerkzeug benötigt, die angesteuert werden müssen, so dass die Herstellung vereinfacht ist.

Die Standfußgeometrie kann eine Standfläche für ein aufrechtes Stehen des Kunststoffbehälters aufweisen. Dabei kann die Standfußgeometrie einen Standring bilden, der unterbrochen ausgebildet sein kann, so dass die Standfußgeometrie mindestens zwei voneinander getrennte Standfuß-Teilgeometrien aufweisen kann. Der Standring kann im Vergleich zum ersten Zustand im zweiten Zustand einen vergrößerten Durchmesser aufweisen.

Das Bodenzentrum ist oberhalb einer von der Standfußgeometrie gebildeten Standfläche angeordnet, wenn der Kunststoffbehälter aufrecht auf der Standfußgeometrie angeordnet ist.

Der Abstand zwischen dem Bodenzentrum und der Standfußgeometrie kann radial zu einer Achse ermittelt werden, die sich längs durch den Kunststoffbehälter erstreckt bzw., wenn der Kunststoffbehälter aufrecht steht, senkrecht zu der Standfläche ausgerichtet ist.

Es kann gemäß einem Beispiel vorgesehen sein, dass das Bodenzentrum im zweiten Zustand im Vergleich zum ersten Zustand abgesenkt ist.

Durch die Verformung der Funktionsgeometrie und die Vergrößerung des Abstands zwischen dem Bodenzentrum und der Standfußgeometrie kann das Bodenzentrum beim Wechsel von dem ersten in den zweiten Zustand abgesenkt werden. Das Bodenzentrum kann dabei weiterhin höher als Standfußgeometrie angeordnet sein. Wenn der Kunststoffbehälter im zweiten Zustand auf die Standfußgeometrie gestellt wird, kann das Bodenzentrum daher höher als die Standfläche angeordnet sein.

Gemäß einem weiteren Beispiel kann sich die Funktionsgeometrie zumindest teilweise in einer Umfangrichtung um das Bodenzentrum erstrecken.

Die Funktionsgeometrie kann sich dabei in seiner Längserstreckung mit einem Richtungsvektoranteil zumindest teilweise in der Umfangrichtung um das Bodenzentrum erstrecken.

Weiter kann die Funktionsgeometrie zum Beispiel einen Nut- oder Knickabschnitt aufweisen, wobei sich die Nut bzw. der Knick in das Innere des Kunststoffbehälters hinein erstrecken. Dabei können die Nut bzw. der Knick als Falte in dem Material des Behälterbodens ausgebildet sein. Die Nut kann auch Rille genannt werden.

Weiter kann zum Beispiel vorgesehen sein, dass die Funktionsgeometrie sich zumindest teilweise radial zum Bodenzentrum erstreckt.

Wenn die Funktionsgeometrie als Nut- oder Knickabschnitt ausgebildet ist, kann sich ein Richtungsvektoranteil der Längserstreckung eines Teils der Funktionsgeometrie radial zum Bodenzentrum erstrecken. Dabei kann sich die Funktionsgeometrie z. B. auch zwischen zwei Standfuß-Teilgeometrien erstrecken. Wenn die Standfuß-Teilgeometrien z. B. durch Spannbänder voneinander getrennt sind, kann die Funktionsgeometrie zwischen den Standfuß-Teilgeometrien und den Spannbändern angeordnet sein.

Weiter kann die Funktionsgeometrie beispielsweise schleifenförmig ausgebildet sein.

Die Schleifenform kann z. B. auch eine Ringform sein. Die Funktionsgeometrie kann in diesem Beispiel dann jeweils zwei, insbesondere parallele, Teilabschnitte aufweisen, die zwischen der Standfußgeometrie und dem Bodenzentrum angeordnet sind und sich vorzugsweise tangential zu der Umfangsrichtung um das Bodenzentrum erstrecken könne.

Gemäß einem weiteren Beispiel kann der Kunststoffbehälter eine Vielzahl, vorzugsweise fünf, Standfuß-Teilgeometrien aufweisen, die durch Spannbänder voneinander getrennt sind, wobei mindestens einer der Standfuß-Teilgeometrien mindestens eine durch eine Erhöhung des Innendrucks im Kunststoffbehälter verformbare Funktionsgeometrie zugeordnet ist.

Die Standfuß-Teilgeometrien sind Komponenten der Standfußgeometrie. Wenn fünf Standfuß-Teilgeometrien vorgesehen sind, kann der Behälterboden petaloid ausgebildet sein. Die Standfuß-Teilgeometrien können dann Kronblattstrukturen und einen unterbrochenen Standring ausbilden, wobei sich der Standring um das Bodenzentrum erstrecken kann. Weiter kann jeder der Standfuß-Teilgeometrien mindestens eine durch eine Erhöhung des Innendrucks im Kunststoffbehälter verformbare Funktionsgeometrie zugeordnet sein.

Dabei können sich die Funktionsgeometrien zum Beispiel zumindest teilweise zwischen den Standfuß-Teilgeometrien und den Spannbändern erstrecken.

Die Funktionsgeometrien können dann beim Verformen den Abstand zwischen den Standfuß-Teilgeometrien und den Spannbändern vergrößern.

Weiter betrifft die Erfindung ein Formwerkzeug zum Blasformen eines Behälterbodens eines Kunststoffbehälters zum Aufnehmen von gashaltigen Flüssigkeiten, wobei das Formwerkzeug eine erste Formkontur für mindestens ein Bodenzentrum und eine zweite Formkontur für mindestens eine Standfußgeometrie aufweist, wobei die zweite Formkontur sich zumindest teilweise um die erste Formkontur erstreckt, wobei die zweite Formkontur tiefer in der Form als die erste Formkontur angeordnet ist, wobei erfindungsgemäß vorgesehen ist, dass das Formwerkzeug mindestens eine dritte Formkontur zum Formen der verformbaren Funktionsgeometrie des zu formenden Behälterbodens zum Verschieben angrenzender Bereiche des Behälterbodens aufweist, wobei die dritte Formkontur zumindest teilweise zwischen der ersten Formkontur und der zweiten Formkontur angeordnet ist, wobei der zu formende Behälterboden des Kunststoffbehälters einen ersten unverformten Zustand, in dem die Funktionsgeometrie unverformt ist und die Standfußgeometrie in einem ersten Abstand zum Bodenzentrum angeordnet ist, und einen zweiten verformten Zustand aufweist, in dem die Funktionsgeometrie verformt ist und die Standfußgeometrie in einem zweiten Abstand zum Bodenzentrum angeordnet ist, wobei der zweite Abstand größer als der erste Abstand ist.

Mit dem Formwerkzeug wird eine Behälterform für einen Behälterboden des oben beschrieben Kunststoffbehälters bereitgestellt. Das Formwerkzeug weist dabei Formkonturen zum Formen des Bodenzentrums, der Standfußgeometrie und der zumindest teilweise dazwischen angeordneten Funktionsgeometrie auf. Damit kann mit dem Bereitstellen dieser Formkonturen zur Herstellung von Kunststoffbehältern der benötigte Blasdruck für die Formung des Kunststoffbehälters verringert werden. Zusätzlich zu schaltende Ventile wie im oben beschriebenen Stand der Technik werden nicht benötigt, so dass die Herstellung und die Verwendung des Formwerkzeugs kostengünstiger als im Stand der Technik ist. Weitere Vorteile und Wirkungen sowie Weiterbildungen des Formwerkzeugs ergeben sich aus den Vorteilen und Wirkungen sowie Weiterbildungen des oben beschriebenen Kunststoffbehälters. Zur Vermeidung von Wiederholungen wird daher in dieser Hinsicht auf die vorangegangene Beschreibung verwiesen.

Die dritte Formkontur kann sich zumindest teilweise in einer Umfangrichtung um die erste Formkontur erstrecken.

Gemäß einem weiteren Beispiel kann die dritte Formkontur als Vorsprung, vorzugsweise als Feder oder Grat, ausgebildet sein.

Der Vorsprung kann von einer Oberfläche des Formwerkzeugs hervorragen, die zum Formen des Behälterbodens des Kunststoffbehälters ausgebildet ist.

Weiter kann zum Beispiel vorgesehen sein, dass sich die dritte Formkontur zumindest teilweise radial zur ersten Formkontur erstreckt.

Wenn die dritte Formkontur als Vorsprung ausgebildet ist, kann sich ein Richtungsvektoranteil der Längserstreckung eines Teils der dritten Formkontur radial zur ersten Formkontur erstrecken. Dabei kann sich die dritte Formkontur z. B. auch zwischen zwei Teilen der zweiten Formkontur erstrecken. Wenn die Teile der zweiten Formkontur z. B. durch eine vierte Formkontur zum Formen eines Spannbands voneinander getrennt sind, kann die dritte Formkontur zwischen den Teilen der zweiten Formkonturen und den vierten Formkonturen angeordnet sein.

Es ist weiter denkbar, dass die dritte Formkontur beispielsweise schleifenförmig ausgebildet ist.

Die Schleifenform kann z. B. auch eine Ringform sein. Die dritte Formkontur kann in diesem Beispiel dann jeweils zwei, insbesondere parallele, Teilabschnitte aufweisen, die zwischen der ersten und zweiten Formkontur angeordnet sind und sich vorzugsweise tangential zu der Umfangsrichtung um die erste Formkontur erstrecken könne.

Das Formwerkzeug kann zum Beispiel eine Vielzahl, vorzugsweise fünf, zweite Formkonturen aufweisen, wobei mindestens einer der zweiten Formkonturen mindestens eine dritte Formkontur zugeordnet ist.

Die zweiten Formkonturen können durch vierte Formkonturen für Spannbänder voneinander getrennt sein. Weiter kann jeder der zweiten Formkonturen mindestens eine dritte Formkontur zugeordnet sein.

In einem weiteren Beispiel kann vorgesehen sein, dass sich die dritten Formkonturen zumindest teilweise zwischen den zweiten Formkonturen und vierten Formkonturen für Spannbänder erstrecken.

Die von den dritten Formkonturen in dem Behälterboden ausgebildeten Funktionsgeometrien können beim Verformen dann den Abstand zwischen den durch die zweiten Formkonturen ausgebildeten Standfuß-Teilgeometrien und den durch die vierten Formkonturen ausgebildeten Spannbändern vergrößern.

Die Erfindung betrifft weiter eine Vorrichtung zum Herstellen von Behältern, umfassend mindestens eine Blasformstation zum Blasformen eines Kunststoffbehälters, wobei die Blasformstation ein Formwerkzeug nach der vorangegangenen Beschreibung aufweist.

Vorteile und Wirkungen sowie Weiterbildungen der Vorrichtung ergeben sich aus den Vorteilen und Wirkungen sowie Weiterbildungen des oben beschriebenen Formwerkzeugs. Zur Vermeidung von Wiederholungen wird daher in dieser Hinsicht auf die vorangegangene Beschreibung verwiesen.

Weiter betrifft die Erfindung ein Verfahren zum Herstellen und Befüllen von Kunststoffbehältern, wobei das Verfahren zumindest folgende Schritte aufweist: Herstellen mindestens eines Kunststoffbehälters nach der vorangegangenen Beschreibung , insbesondere mit einer Vorrichtung nach der vorangegangenen Beschreibung, wobei der Behälterboden des Kunststoffbehälters im ersten Zustand ist; Befüllen des Kunststoffbehälters mit einer gashaltigen Flüssigkeit, wobei ein im Kunststoffbehälter erzeugter Druck im Kunststoffbehälter die mindestens eine Funktionsgeometrie verformt und den Behälterboden in den zweiten Zustand überführt.

Mit dem Verfahren kann damit ein Kunststoffbehälter zunächst derart hergestellt werden, dass er im ersten Zustand ist, um dann, z. B. durch das Befüllen mit einer gashaltigen Flüssigkeit, den Druck im Kunststoffbehälter zu erhöhen und die Funktionsgeometrie in den zweiten Zustand zu wechseln, wobei der Kunststoffbehälter damit fertig ausgeformt wird. Damit nutzt das Verfahren den Druckerhöhung durch die gashaltige Flüssigkeit für den letzten Ausformungsschritt des Kunststoffbehälters aus. Im Schritt Herstellen kann z. B. ein Druck im Bereich zwischen 20 bar und 35 bar, vorzugsweise zwischen 21 bar und 33 bar, weiter vorzugsweise zwischen 21 bar und 31 bar, am meisten bevorzugt zwischen 21 bar und 25 bar, verwendet werden, wobei im Stand der Technik Blasdrücke von 30 bar bis 45 bar verwendet werden. Somit kann durch das Verfahren eine signifikante Verringerung des Blasdrucks bewirkt werden. Das Gas in der Flüssigkeit kann vorzugsweise Kohlenstoffdioxid sein, wobei die Flüssigkeit vorzugsweise als Soft-Drink ausgebildet ist.

Alternativ können die Schritte des Verfahrens auch zeitlich überlappend durchgeführt werden, wobei durch das Befüllen eines Vorformlings mit einer gashaltigen Flüssigkeit in einer Form zunächst ein Kunststoffbehälter im ersten Zustand hergestellt wird. Nach dem Entnehmen des Kunststoffbehälters aus der Form kann durch die Erhöhung des Innendrucks durch das Gas der Flüssigkeit der Kunststoffbehälter automatisch in den zweiten Zustand übergehen.

Weitere Vorteile und Wirkungen sowie Weiterbildungen der Vorrichtung ergeben sich aus den Vorteilen und Wirkungen sowie Weiterbildungen des oben beschriebenen Formwerkzeugs bzw. der oben beschriebenen Vorrichtung. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1: eine schematische Darstellung eines Kunststoffbehälters;
- Figur 2a, b: eine schematische Teil-Darstellung einer Kontur eines Behälterbodens mit Funktionsgeometrie;
- Figur 3a, b: eine schematische Darstellung eines Behälterbodens mit Funktionsgeometrie;
- Figur 4a, b: eine schematische Darstellung eines Behälterbodens mit Funktionsgeometrie;
- Figur 5a, b: eine schematische Darstellung eines Behälterbodens mit Funktionsgeometrie;
- Figur 6: eine schematische Querschnittsdarstellung eines Formwerkzeugs;
- Figur 7: eine schematische Darstellung einer Vorrichtung zum Herstellen von Behältern; und
- Figur 8: ein Flussdiagramm eines Verfahrens zum Herstellen und Befüllen von Kunststoffbehältern

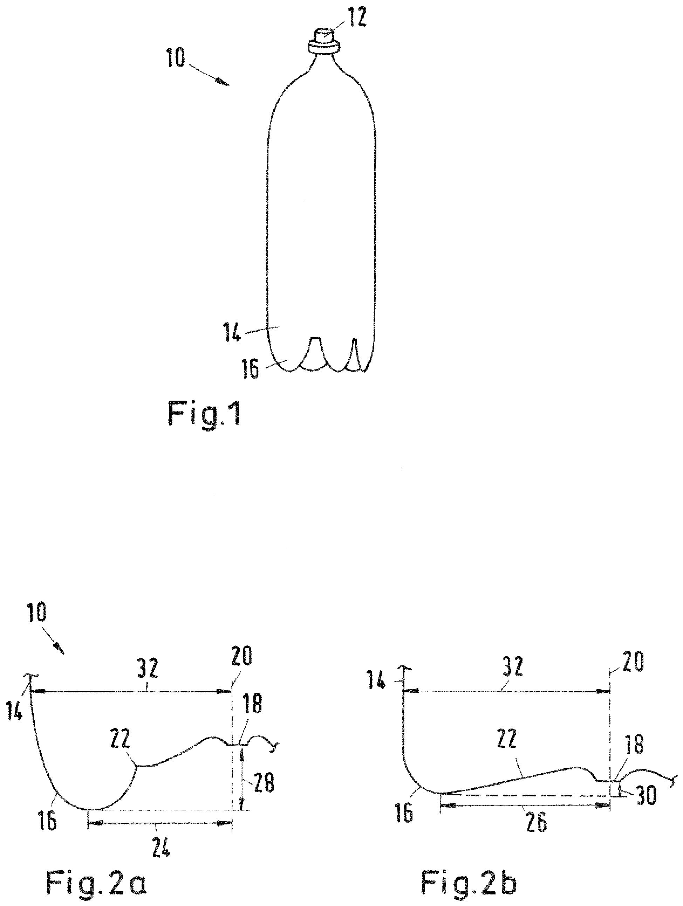

In Figur 1 wird schematisch ein Kunststoffbehälter 10 dargestellt, der in diesem Beispiel die Form einer Flasche aufweist. Der Kunststoffbehälter 10 erstreckt sich zwischen einer Mündung 12 und einem Behälterboden 14.

Der Behälterboden 14 weist eine Standfußgeometrie 16 auf, wobei der Kunststoffbehälter 10 mittels der Standfußgeometrie 16 aufrecht angeordnet werden kann. Die Mündung 12 weist dann nach oben.

Die Standfußgeometrie 16 erstreckt sich um ein Bodenzentrum 18 des Behälterbodens 14, wobei in den Figuren 2a und 2b eine Teil-Kontur des Behälterbodens 14 abgebildet ist. Durch das Bodenzentrum 18 erstreckt sich eine Längsachse 20 des Kunststoffbehälters 10. Die Längsachse 20 kann sich weiter durch die Mündung 12 des Kunststoffbehälters 10 erstrecken.

Zwischen der Standfußgeometrie 16 und dem Bodenzentrum 18 ist eine Funktionsgeometrie 22 angeordnet, die in der Kontur des Behälterbodens 14 ausgebildet sein kann. In diesem Beispiel ist die Funktionsgeometrie 22 als Rille in dem Kunststoffbehälter 10 ausgebildet, wobei die Kontur des Kunststoffbehälters 10 zum Formen der Rille in das Innere des Kunststoffbehälters 10 hinein erstreckt. Die Rille kann als eine Falte im Kunststoffbehälter 10 ausgebildet sein.

Die Funktionsgeometrie 22 ist verformbar ausgebildet, wobei sich die Funktionsgeometrie 22 durch eine Erhöhung des Innendrucks im Kunststoffbehälters 10 verformen kann. Wenn die Funktionsgeometrie 22 als Rille ausgebildet ist, kann eine Erhöhung des Innendrucks im Kunststoffbehälter 10 ein Auffalten der Rille bewirken, so dass die an die Rille angrenzenden Bereiche des Kunststoffbehälters 10 voneinander wegbewegt werden. Da die Funktionsgeometrie 22 zwischen der Standfußgeometrie 16 und dem Bodenzentrum 18 angeordnet ist, wird durch eine durch eine Erhöhung des Innendrucks im Kunststoffbehälter bewirkte Verformung der Funktionsgeometrie 22 ein Abstand zwischen der Standfußgeometrie 16 und dem Bodenzentrum 18 vergrößert.

Figur 2a zeigt dabei einen ersten Zustand des Behälterbodens 14, in dem die Funktionsgeometrie 22 unverformt ist. Die als Rille ausgebildete Funktionsgeometrie 22 ragt in das Innere des Kunststoffbehälters 10 hinein.

In dem ersten Zustand ist die Standfußgeometrie 16 in einem ersten Abstand 24 von dem Bodenzentrum 18 angeordnet.

Figur 2b zeigt einen zweiten Zustand des Behälterbodens 14. In dem zweiten Zustand ist die Funktionsgeometrie 22 durch einen erhöhten Innendruck im Kunststoffbehälter 10 verformt worden. Die Rille aus diesem Beispiel ist dabei nach außen gedrückt worden, wobei die Wände der Rille abgerollt wurden und dadurch die anliegenden Bereiche des Kunststoffbehälters 10 voneinander wegbewegt haben.

Nach dem Verformen der Funktionsgeometrie 22 ist die Standfußgeometrie 16 in einem zweiten Abstand 26 von dem Bodenzentrum 18 angeordnet, der größer als der erste Abstand 24 ist.

Gleichzeitig kann das Bodenzentrum 18 im ersten Zustand in Richtung der Längsachse 20 einen dritten Abstand 28 von einer durch die Standfußgeometrie 16 definierten Standfläche 38 aufweisen. Im zweiten Zustand kann das Bodenzentrum 18 abgesenkt sein, so dass das Bodenzentrum 18 dann in einem vierten Abstand 30 zur Standfläche 38 angeordnet ist, der kleiner als der dritte Abstand 28 ist.

Der Radius 32 des Kunststoffbehälters 10 kann in beiden Zuständen gleich sein. D. h., dass ein fünfter Abstand zwischen der Behälterwand des Kunststoffbehälters 10 und der Längsachse 20 durch eine Verformung der Funktionsgeometrie 22 unveränderbar sein kann.

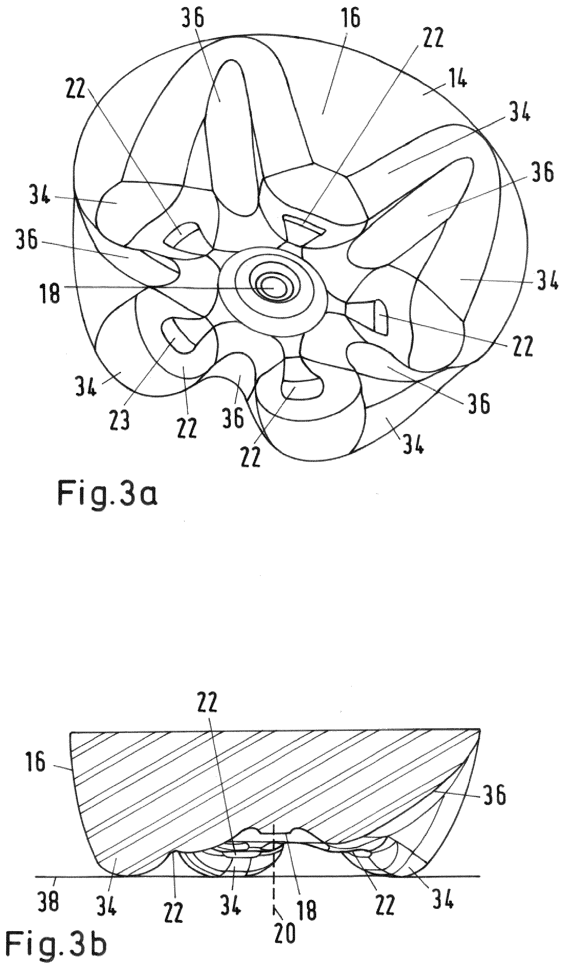

Figur 3a zeigt einen Behälterboden 14 mit einer ersten beispielhaften Ausführungsform einer Funktionsgeometrie 22 und einer Standfußgeometrie 16, die fünf Standfuß-Teilgeometrien 34 aufweisen kann.

Die Standfuß-Teilgeometrien 34 können als Petaloid ausgebildet sein und damit zusammen einen Petaloid Boden bilden.

Die Nut bzw. Rille erstreckt sich in diesem Beispiel tangential um das Bodenzentrum 18 bzw. die Längsachse 20 des Kunststoffbehälters 10.

Die Funktionsgeometrie 22 kann damit unter Einbringung einer zusätzlichen Nut bzw. Rille geschaffen werden, wobei die Nut von der Standfuß-Teilgeometrie 34 in Richtung Bodenzentrum 18 gesehen zwischen dem Standring und dem Bodenzentrum 18 angeordnet sein kann. Wenn der äußere Radius des Standrings in drei etwa gleich große Bereiche geteilt wird, kann die Nut im mittleren der drei Bereiche, d. h. im zweiten Drittel des halben Petaloid Bodens, angeordnet sein. Diese Nut kann dann jeweils tangential in die Enden der Standfuß-Teilgeometrie auslaufen und kann eine Tiefe von mindestens 1/300, vorzugsweise von mindestens 1/200, weiter vorzugsweise mindestens 1/100, am meisten bevorzugt von mindestens 1/63 des Gesamt-Bodendurchmessers aufweisen. Optional kann die Tiefe maximal 1/10 des Gesamt-Bodendurchmessers aufweisen. Die Charakteristik des Verlaufs der Standfuß-Teilgeometrie 34 bleibt dabei vorzugsweise unverändert und ist als Unterbrechung der Kontur des Behälterbodens 14 anzusehen, wie in Figur 3b dargestellt ist.

Der Radius des Standrings, der durch die Standfußgeometrie 16 definiert wird, kann sich in diesem Ausführungsbeispiel beim Übergang von dem ersten Zustand zum zweiten Zustand vergrößern, z. B. um einen Wert aus dem Bereich von 0,1 mm bis 0,5 mm, vorzugsweise 0,3 bis 0,45 mm.

Weiter kann in diesem Ausführungsbeispiel der Abstand 28 im ersten Zustand zwischen 4 mm und 12 mm, vorzugsweise zwischen 5 mm und 10 mm, weiter vorzugsweise zwischen 6 mm und 7 mm, am meisten bevorzugt 6,6 mm, betragen. Im zweiten Zustand kann der Abstand 30 dann zwischen 0,8 mm und 4,9 mm, vorzugsweise zwischen 0,9 mm und 3,0 mm, weiter vorzugsweise zwischen 0,96 mm und 2,5 mm betragen.

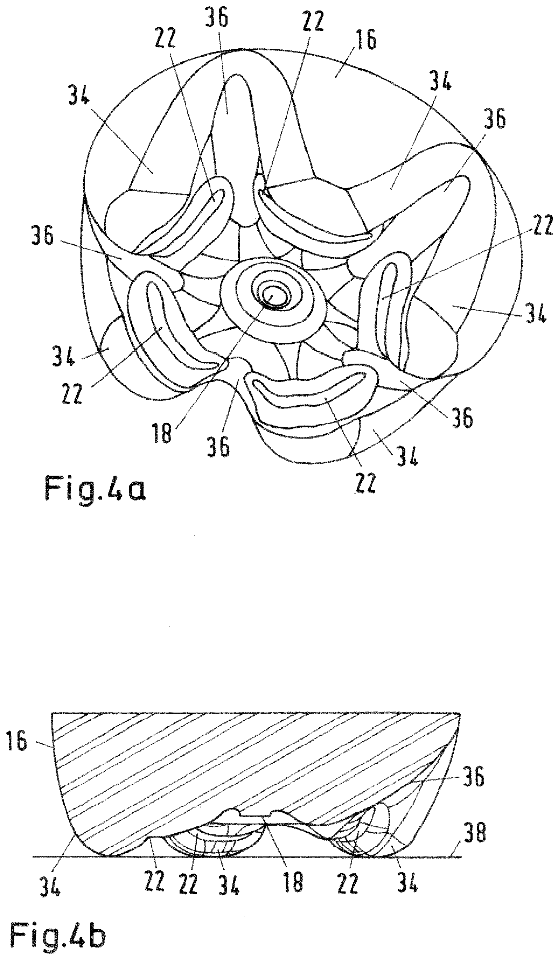

Figur 4a zeigt einen Behälterboden 14 mit einer zweiten beispielhaften Ausführungsform einer Funktionsgeometrie 22 und einer Standfußgeometrie 16, die fünf Standfuß-Teilgeometrien 34 aufweisen kann.

Die Standfuß-Teilgeometrien 34 können als Petaloid ausgebildet sein und damit zusammen einen Petaloid Boden bilden.

Die Funktionsgeometrie 22 erstreckt sich ähnlich zu dem Beispiel aus den Figuren 3a und 3b tangential um das Bodenzentrum 18 und ist zwischen der Standfuß-Teilgeometrie 34 und dem Bodenzentrum 18 angeordnet. Im Vergleich zu der ersten Ausführungsbeispiel ist die Funktionsgeometrie 22 in diesem zweiten Ausführungsbeispiel länger und erstreckt sich bis in die an die Standfuß-Teilgeometrie 34 angrenzenden Spannbänder 36.

Die Funktionsgeometrie 22 kann damit unter Einbringung einer zusätzlichen Nut bzw. Rille geschaffen werden, wobei die Nut von der Standfuß-Teilgeometrie 34 in Richtung Bodenzentrum 18 gesehen zwischen dem Standring und dem Bodenzentrum 18 angeordnet sein kann. Wenn der äußere Radius des Standrings in drei etwa gleich große Bereiche geteilt wird, kann die Nut im mittleren der drei Bereiche, d. h. im zweiten Drittel des halben Petaloid Bodens, angeordnet sein. Diese Nut kann dabei jeweils zu der jeweiligen Standfuß-Teilgeometrie 34 tangential in die in Umfangsrichtung um das Bodenzentrum 18 angeordneten Enden der Standfuß-Teilgeometrie 34 und tangential in den unteren Bereich der Spannbänder 36 des Behälterbodens auslaufen. Dabei kann die Nut bzw. Rille eine gleiche oder veränderliche Tiefe aufweisen, die maximal die Tiefe von 1/10, vorzugsweise maximal 1/15, weiter vorzugsweise maximal 1/20 des Gesamt-Bodendurchmessers, tangential in den Enden auslaufend, aufweisen kann. Die minimale Tiefe kann z. B. 1/100 des Gesamt-Bodendurchmessers betragen. Die Charakteristik des Verlaufs der Standfuß-Teilgeometrie 34 bleibt dabei vorzugsweise unverändert und ist als Unterbrechung der Kontur des Behälterbodens 14 anzusehen, wie in Figur 4b dargestellt ist.

Der Radius des Standrings, der durch die Standfußgeometrie 16 definiert wird, kann sich in diesem Ausführungsbeispiel beim Übergang von dem ersten Zustand zum zweiten Zustand vergrößern, z. B. um einen Wert aus dem Bereich von 0,8 mm bis 2 mm, vorzugsweise 1,2 bis 1,4 mm.

Weiter kann in diesem Ausführungsbeispiel der Abstand 28 im ersten Zustand zwischen 4 mm und 12 mm, vorzugsweise zwischen 5 mm und 10 mm, weiter vorzugsweise zwischen 6 mm und 7 mm, am meisten bevorzugt 6,6 mm, betragen. Im zweiten Zustand kann der Abstand 30 dann zwischen 0,8 mm und 4,9 mm, vorzugsweise zwischen 0,9 mm und 3,0 mm, weiter vorzugsweise zwischen 0,96 mm und 2,5 mm betragen.

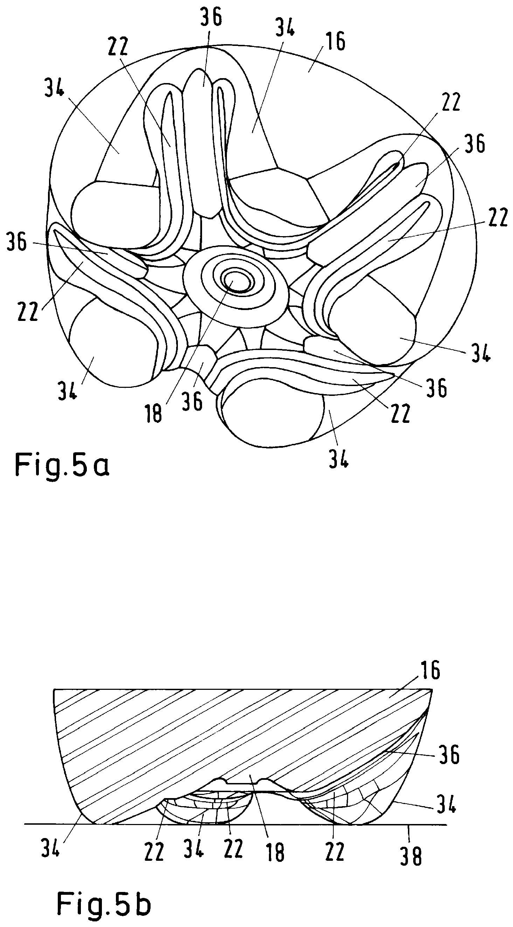

Figur 5a zeigt einen Behälterboden 14 mit einer dritten beispielhaften Ausführungsform einer Funktionsgeometrie 22 und einer Standfußgeometrie 16, die fünf Standfuß-Teilgeometrien 34 aufweisen kann.

Die Standfuß-Teilgeometrien 34 können als Petaloid ausgebildet sein und damit zusammen einen Petaloid Boden bilden.

Die Funktionsgeometrie 22 weist in diesem Beispiel eine V-Form auf, wobei sich die Schenkel der V-Form zwischen den dazugehörigen Standfuß-Teilgeometrien 34 und Spannbändern 36 erstrecken, die zwischen den Standfuß-Teilgeometrien 34 angeordnet sein können.

Die V-Form der Funktionsgeometrie 22 kann sich damit um einen Teil der jeweiligen Standfuß-Teilgeometrie 34 erstrecken und einen Übergang zwischen der entsprechenden Standfuß-Teilgeometrie 34 zu den angrenzenden Spannbändern 36 und dem Bodenzentrum 18 bilden.

Die Spitze der V-Form kann abgerundet sein und zum Bodenzentrum 18 weisen.

Die Funktionsgeometrie 22 kann damit unter Einbringung einer zusätzlichen Nut bzw. Rille geschaffen werden, wobei die Nut von der Standfuß-Teilgeometrie 34 in Richtung Bodenzentrum 18 gesehen zwischen dem Standring und dem Bodenzentrum 18 angeordnet sein kann. Wenn der äußere Radius des Standrings in drei etwa gleich große Bereiche geteilt wird, kann die Nut im mittleren der drei Bereiche, d. h. im zweiten Drittel des halben Petaloid Bodens, angeordnet sein. Diese Nut kann dabei jeweils zu der jeweiligen Standfuß-Teilgeometrie 34 tangential in die in Umfangsrichtung um das Bodenzentrum 18 angeordneten Enden der Standfuß-Teilgeometrie 34 und tangential in den unteren Bereich der Spannbänder 36 des Behälterbodens auslaufen. Dabei kann die Nut bzw. Rille eine gleiche oder veränderliche Tiefe aufweisen, die maximal die Tiefe von 1/10, vorzugsweise maximal 1/15, weiter vorzugsweise maximal 1/20 des Gesamt-Bodendurchmessers, tangential in den Enden auslaufend, aufweisen kann. Die minimale Tiefe kann z. B. 1/100 des Gesamt-Bodendurchmessers betragen. Die Charakteristik des Verlaufs der Standfuß-Teilgeometrie 34 bleibt dabei vorzugsweise unverändert und ist als Unterbrechung der Kontur des Behälterbodens 14 anzusehen, wie in Figur 5b dargestellt ist.

Der Radius des Standrings, der durch die Standfußgeometrie 16 definiert wird, kann sich in diesem Ausführungsbeispiel beim Übergang von dem ersten Zustand zum zweiten Zustand vergrößern, z. B. um einen Wert aus dem Bereich von 0,5 mm bis 1 mm, vorzugsweise 0,7 bis 0,8 mm.

Weiter kann in diesem Ausführungsbeispiel der Abstand 28 im ersten Zustand zwischen 4 mm und 12 mm, vorzugsweise zwischen 5 mm und 10 mm, weiter vorzugsweise zwischen 6 mm und 7 mm, am meisten bevorzugt 6,6 mm, betragen. Im zweiten Zustand kann der Ab-stand 30 dann zwischen 0,8 mm und 4,9 mm, vorzugsweise zwischen 0,9 mm und 3,0 mm, weiter vorzugsweise zwischen 0,98 mm und 2,5 mm betragen.

Die Funktionsgeometrie 22 kann weiter anstatt wie in den oben beschriebenen Ausführungsbeispielen auch schleifenförmig ausgebildet sein (nicht dargestellt). So kann die Funktionsgeometrie 22 z. B. eine O-Formaufweisen, die zwischen einer Standfuß-Teilgeometrie 34 und dem Bodenzentrum 18 angeordnet sein kann.

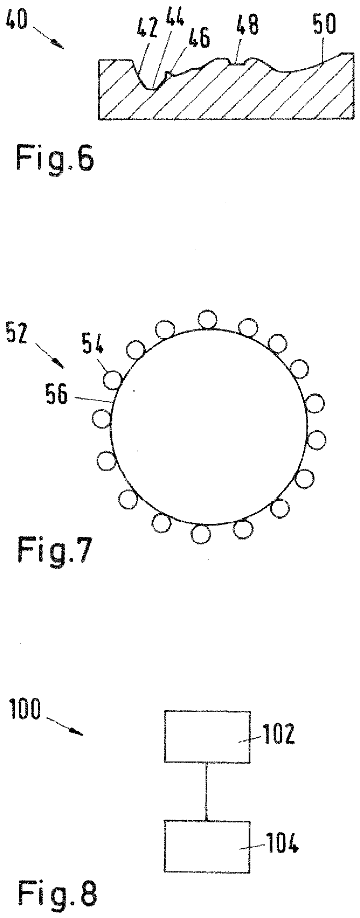

In Figur 6 ist ein Formwerkzeug 40 im Querschnitt dargestellt. Mit dem Formwerkzeug 40 kann ein Behälterboden 14 für den Kunststoffbehälter 10 ausgebildet werden.

Das Formwerkzeug 40 kann Teil einer Blasform für den Kunststoffbehälter 10 sein. Dabei weist das Formwerkzeug 40 eine Kontur 42 des Behälterbodens 14 auf. Bei der Herstellung des Kunststoffbehälters 40 kann ein Bodenteil eines Vorformlings durch einen Streckblas-Vorgang an die Kontur 42 gedrückt werden, um den Behälterboden 14 für den Kunststoffbehälter 10 auszubilden.

Dazu weist die Kontur 42 des Formwerkzeugs 40 weiter mindestens eine erste Formkontur 48 zum Ausformen mindestens eines Bodenzentrums 18, mindestens eine zweite Formkontur 44 zum Ausbilden mindestens einer Standfußgeometrie 16 und mindestens eine dritte Formkontur 46 zum Ausbilden mindestens einer Funktionsgeometrie 22 auf. Die dritte Formkontur 46 ist zwischen der ersten Formkontur 48 und der zweiten Formkontur 44 angeordnet.

Weiter kann die Kontur 42 des Formwerkzeugs 40 mindestens eine vierte Formkontur 50 zum Ausbilden von Spannbändern 36 aufweisen. Die vierten Formkonturen 50 können zwischen zwei zweiten Formkonturen 44 angeordnet sein. So können die zweiten und vierten Formkonturen 44, 50 sternförmig abwechselnd um das Bodenzentrum 18 angeordnet sein.

In diesem Beispiel sind die dritten Formkonturen 46 als Vorsprünge oder Federn ausgebildet, sich von dem Formwerkzeug 40 abragen.

Die Längserstreckung der dritten Formkonturen 46 kann derart gewählt sein, dass sie die gewünschte Form der Funktionsgeometrie 22 in dem Behälterboden ausbilden. So kann eine dritte Formkontur 46 zum Ausbilden einer Funktionsgeometrie 22 gemäß Figur 5a beispielsweise als V-förmiger Vorsprung ausgebildet sein. Gleiches gilt in analoger Weise für die Funktionsgeometrien 22 aus den Beispielen der Figuren 3a und 4a.

Das Formwerkzeug 40 kann Teil einer Blasstation 54 einer Vorrichtung 52 zum Herstellen von Kunststoffbehältern 10 sein. Dabei kann das Formwerkzeug 40 eine Bodenform der Blasstation 54 bilden.

Die Vorrichtung 52 kann eine Vielzahl von Blasstationen 54 aufweisen, die über den Umfang eines drehbaren Rades 56 angeordnet sein können. Dabei kann die Vorrichtung 52 z. B. eine Rotationsmaschine zum Streckblasen von Kunststoffbehältern sein.

In Figur 8 ist ein Flussdiagramm des Verfahrens 100 zum Herstellen und Befüllen eines Kunststoffbehälters dargestellt. Die dargestellten Schritt 102 und 104 können nacheinander oder zeitlich überlappend durchgeführt werden.

Im Schritt 102 wird mindestens ein Kunststoffbehälter hergestellt, der mindestens eine wie in der vorangegangenen Beschreibung beschriebene Funktionsgeometrie zwischen einer Standfußgeometrie und einem Bodenzentrum aufweist. Der Schritt 102 kann optional mit einer wie oben beschriebenen Vorrichtung zum Herstellen von Behältern durchgeführt werden. Der Behälterboden des Kunststoffbehälters ist während des Schritts 102, insbesondere solange der Kunststoffbehälter noch von der Vorrichtung hergestellt wird, im ersten Zustand.

Im Schritt 104 wird der Kunststoffbehälter mit einer gashaltigen Flüssigkeit befüllt. Durch die Erhöhung des Innendrucks im Kunststoffbehälter durch das in der Flüssigkeit enthaltene Gas wird die Funktionsgeometrie verformt und der Behälterboden geht in den zweiten Zustand über.

Wenn der Schritt 104 mit dem Schritt 102 überlappt, kann durch das Einfüllen der Flüssigkeit in den Vorformling des Kunststoffbehälters der Kunststoffbehälter im ersten Zustand ausformt werden. Nach dem Entnehmen des Kunststoffbehälters aus der Form der Vorrichtung kann das in der Flüssigkeit enthaltene Gas durch eine Druckerhöhung im Kunststoffbehälter den Übergang in den zweiten Zustand bewirken.

### Bezugszeichenliste

- 10: Kunststoffbehälter
- 12: Mündung
- 14: Behälterboden
- 16: Standfußgeometrie
- 18: Bodenzentrum
- 20: Längsachse
- 22: Funktionsgeometrie
- 24: erster Abstand
- 26: zweiter Abstand
- 28: dritter Abstand
- 30: vierter Abstand
- 32: Radius
- 34: Standfuß-Teilgeometrie
- 36: Spannband
- 38: Standfläche
- 40: Formwerkzeug
- 42: Kontur
- 44: zweite Formkontur
- 46: dritte Formkontur
- 48: erste Formkontur
- 50: vierte Formkontur
- 52: Vorrichtung zum Herstellen von Kunststoffbehältern
- 54: Blasstation
- 56: Rad

## Patentansprüche

1. Kunststoffbehälter zum Aufnehmen von gashaltigen Flüssigkeiten, umfassend einen Behälterboden (14) mit mindestens einem Bodenzentrum (18) und mindestens einer Standfußgeometrie (16), die sich zumindest teilweise um das Bodenzentrum (18) erstreckt, wobei das Bodenzentrum (18) höher als die Standfußgeometrie (16) angeordnet ist, **dadurch gekennzeichnet, dass** in den Behälterboden (14) mindestens eine durch eine Erhöhung eines Innendrucks im Kunststoffbehälter (10) verformbare Funktionsgeometrie (22) zum Verschieben angrenzender Bereiche des Behälterbodens (14) eingebettet ist, die zumindest teilweise zwischen der Standfußgeometrie (16) und dem Bodenzentrum (18) angeordnet ist, wobei der Behälterboden (14) einen unverformten ersten Zustand, in dem die Funktionsgeometrie (22) unverformt ist und die Standfußgeometrie (16) in einem ersten Abstand (24) zum Bodenzentrum (18) angeordnet ist, und einen verformten zweiten Zustand aufweist, in dem die Funktionsgeometrie (22) verformt ist und die Standfußgeometrie (16) in einem zweiten Abstand (26) zum Bodenzentrum (18) angeordnet ist, wobei der zweite Abstand (26) größer als der erste Abstand (24) ist.

2. Kunststoffbehälter nach Anspruch 1, **dadurch gekennzeichnet, dass** das Bodenzentrum (18) im zweiten Zustand im Vergleich zum ersten Zustand abgesenkt ist.

3. Kunststoffbehälter nach Anspruch 1 oder 2, **dadurch gekennzeichnet, dass** sich die Funktionsgeometrie (22) zumindest teilweise in einer Umfangrichtung um das Bodenzentrum (18) erstreckt.

4. Kunststoffbehälter nach einem der vorangegangenen Ansprüche, **dadurch gekennzeichnet, dass** die Funktionsgeometrie (22) sich zumindest teilweise radial zum Bodenzentrum (18) erstreckt.

5. Kunststoffbehälter nach einem der vorangegangenen Ansprüche, **dadurch gekennzeichnet, dass** die Funktionsgeometrie (22) schleifenförmig ausgebildet ist.

6. Kunststoffbehälter nach einem der vorangegangenen Ansprüche, **dadurch gekennzeichnet, dass** der Kunststoffbehälter (10) eine Vielzahl, vorzugsweise fünf, Standfuß-Teilgeometrien (34) aufweist, die durch Spannbänder (36) voneinander getrennt sind, wobei mindestens einer der Standfuß-Teilgeometrien (34) mindestens eine durch eine Erhöhung des Innendrucks im Kunststoffbehälter (10) verformbare Funktionsgeometrie (22) zugeordnet ist.

7. Kunststoffbehälter nach Anspruch 6, **dadurch gekennzeichnet, dass** sich die Funktionsgeometrien (22) zumindest teilweise zwischen den Standfuß-Teilgeometrien (34) und den Spannbändern (36) erstrecken.

8. Formwerkzeug zum Blasformen eines Behälterbodens (14) eines Kunststoffbehälters (10) zum Aufnehmen von gashaltigen Flüssigkeiten nach einem der Ansprüche 1 bis 7, wobei das Formwerkzeug (40) eine erste Formkontur (48) für das mindestens eine Bodenzentrum (18) und eine zweite Formkontur (44) für die mindestens eine Standfußgeometrie (16) aufweist, wobei die zweite Formkontur (44) sich zumindest teilweise um die erste Formkontur (48) erstreckt, wobei die zweite Formkontur (44) tiefer in der Form als die erste Formkontur (48) angeordnet ist, wobei das Formwerkzeug (40) mindestens eine dritte Formkontur (46) zum Formen der verformbaren Funktionsgeometrie (22) des zu formenden Behälterbodens (14), aufweist, wobei die dritte Formkontur (46) zumindest teilweise zwischen der ersten Formkontur (48) und der zweiten Formkontur (44) angeordnet ist.

9. Formwerkzeug nach Anspruch 8, **dadurch gekennzeichnet, dass** sich die dritte Formkontur (46) zumindest teilweise in einer Umfangrichtung um die erste Formkontur (48) erstreckt.

10. Formwerkzeug nach Anspruch 8 oder 9, **dadurch gekennzeichnet, dass** sich die dritte Formkontur (46) zumindest teilweise radial zur ersten Formkontur (48) erstreckt.

11. Formwerkzeug nach einem der Ansprüche 8 bis 10, **dadurch gekennzeichnet, dass** die dritte Formkontur (46) schleifenförmig ausgebildet ist.

12. Formwerkzeug nach einem der Ansprüche 8 bis 11, **dadurch gekennzeichnet, dass** das Formwerkzeug (40) eine Vielzahl, vorzugsweise fünf, zweite Formkonturen (44) aufweist, wobei mindestens einer der zweiten Formkonturen (44) mindestens eine dritte Formkontur (46) zugeordnet ist.

13. Formwerkzeug nach einem der Ansprüche 8 bis 12, **dadurch gekennzeichnet, dass** sich die dritten Formkonturen (46) zumindest teilweise zwischen den zweiten Formkonturen (44) und vierten Formkonturen (50) für Spannbänder (36) erstrecken.

14. Vorrichtung zum Herstellen von Behältern, umfassend mindestens eine Blasformstation (54) zum Blasformen eines Kunststoffbehälters (10), wobei die Blasformstation ein Formwerkzeug (40) nach einem der Ansprüche 8 bis 13 aufweist.

15. Verfahren zum Herstellen und Befüllen von Kunststoffbehältern, wobei das Verfahren (100) zumindest folgende Schritte aufweist:
- Herstellen (102) mindestens eines Kunststoffbehälters nach einem der Ansprüche 1 bis 7, insbesondere mit einer Vorrichtung nach Anspruch 14, wobei der Behälterboden des Kunststoffbehälters im ersten Zustand ist;
- Befüllen (104) des Kunststoffbehälters mit einer gashaltigen Flüssigkeit, wobei ein im Kunststoffbehälter erzeugter Druck im Kunststoffbehälter die mindestens eine Funktionsgeometrie verformt und den Behälterboden in den zweiten Zustand überführt.

## Claims

1. Plastic container for receiving gas-containing liquids, the container comprising a container bottom (14) which has at least one bottom centre (18) and at least one base geometry (16) that extends at least in part around the bottom centre (18), wherein the bottom centre (18) is higher than the base geometry (16), **characterised in that** at least one functional geometry (22), which can be deformed by increasing an internal pressure in the plastic container (10), is embedded in the container bottom (14) for moving adjoining regions of the container bottom (14), and is arranged at least in part between the base geometry (16) and the bottom centre (18), wherein the container bottom (14) has a non-deformed first state in which the functional geometry (22) is not deformed and the base geometry (16) is at a first distance (24) from the bottom centre (18), and a deformed second state in which the functional geometry (22) is deformed and the base geometry (16) is at a second distance (26) from the bottom centre (18), wherein the second distance (26) is greater than the first distance (24).

2. Plastic container according to claim 1, **characterised in that** the bottom centre (18) is lower in the second state in comparison to the first state.

3. Plastic container according to claim 1 or 2, **characterised in that** the functional geometry (22) extends at least partially in a circumferential direction around the bottom centre (18).

4. Plastic container according to one of the previous claims
**characterised in that** the functional geometry (22) extends at least in part radially to the bottom centre (18).

5. Plastic container according to one of the previous claims
**characterised in that** the functional geometry (22) is configured as a loop.

6. Plastic container according to one of the previous claims
**characterised in that** the plastic container (10) has a multiplicity of, preferably five, base segment geometries (34) which are separated from each other by tension straps (36), wherein at least one of the base segment geometries (34) is assigned at least one functional geometry (22) which can be deformed by an increase in the internal pressure in the plastic container (10).

7. Plastic container according to claim 6, **characterised in that** the functional geometries (22) extend at least in part between the base segment geometries (34) and the tension straps (36).

8. Moulding tool for the blow-moulding of a container bottom (14) of a plastic container (10) to receive gas-containing liquids according to one of claims 1 to 7, wherein the moulding tool (40) has a first mould contour (48) for the at least one bottom centre (18) and a second mould contour (44) for the at least one base geometry (16), wherein the second mould contour (44) extends at least partially around the first mould contour (48), wherein the second mould contour (44) is deeper in the mould than the first mould contour (48), wherein the moulding tool (40) has at least a third mould contour (46) for moulding the deformable functional geometry (22) of the container bottom (14) to be moulded, wherein the third mould contour (46) is arranged at least in part between the first mould contour (48) and the second mould contour (44).

9. Moulding tool according to claim 8, **characterised in that** the third mould contour (46) extends at least in part in a circumferential direction around the first mould contour (48).

10. Moulding tool according to claim 8 or 9, **characterised in that** the third mould contour (46) extends at least in part radially to the first mould contour (48).

11. Moulding tool according to one of claims 8 to 10, **characterised in that** the third mould contour (46) is configured as a loop.

12. Moulding tool according to one of claims 8 to 11, **characterised in that** the moulding tool (40) has a multiplicity of, preferably five, second mould contours (44), wherein at least one of the second mould contours (44) is assigned a third mould contour (46).

13. Moulding tool according to one of claims 8 to 12, **characterised in that** the third mould contours (46) extend at least in part between the second mould contours (44) and fourth mould contours (50) for tension straps (36).

14. Device for manufacturing containers, comprising at least one blow-moulding station (54) for blow-moulding a plastic container (10), wherein the blow-moulding station has a moulding tool (40) according to one of claims 8 to 13.

15. Method for manufacturing and filling plastic containers, wherein the method (100) comprises at least the following steps:
- manufacture (102) of at least one plastic container according to one of claims 1 to 7, in particular with a device according to claim 14, wherein the container bottom of the plastic containers is in the first state;
- filling (104) of the plastic containers with a gas-containing liquid, wherein, in the plastic container, a pressure generated within the plastic container deforms the at least one functional geometry and transfers the container bottom into the second state.

## Revendications

1. Contenant en matière plastique destiné à recevoir des liquides contenant du gaz, comprenant un fond de contenant (14) avec au moins un centre de fond (18) et au moins une géométrie de base (16), qui s'étend au moins en partie autour du centre de fond (18), dans lequel le centre de fond (18) est disposé plus haut que la géométrie de base (16), **caractérisé en ce qu'**est disposée dans le fond de contenant (14) au moins une géométrie fonctionnelle (22) déformable par une augmentation d'une pression interne dans le contenant en matière plastique (10) destinée à faire coulisser des zones adjacentes du fond de contenant (14), laquelle est disposée au moins en partie entre la géométrie de base (16) et le centre de fond (18), dans lequel le fond de contenant (14) présente un premier état non déformé, dans lequel la géométrie fonctionnelle (22) est non déformée et la géométrie de base (16) est disposée à une première distance (24) par rapport au centre de fond (18), et un second état déformé, dans lequel la géométrie fonctionnelle (22) est déformée et la géométrie de base (16) est disposée à une seconde distance (26) par rapport au centre de fond (18), dans lequel la seconde distance (26) est supérieure à la première distance (24).

2. Contenant en matière plastique selon la revendication 1, **caractérisé en ce que** le centre de fond (18) est abaissé dans le second état en comparaison avec le premier état.

3. Contenant en matière plastique selon la revendication 1 ou 2, **caractérisé en ce que** la géométrie fonctionnelle (22) s'étend au moins en partie dans une direction périphérique autour du centre de fond (18).

4. Contenant en matière plastique selon l'une quelconque des revendications précédentes, **caractérisé en ce que** la géométrie fonctionnelle (22) s'étend au moins en partie radialement par rapport au centre de fond (18).

5. Contenant en matière plastique selon l'une quelconque des revendications précédentes, **caractérisé en ce que** la géométrie fonctionnelle (22) est réalisée en forme de disque.

6. Contenant en matière plastique selon l'une quelconque des revendications précédentes, **caractérisé en ce que** le contenant en matière plastique (10) présente une pluralité, de préférence cinq, géométries partielles de base (34), qui sont séparées les unes des autres par des bandes de serrage (36), dans lequel au moins une géométrie fonctionnelle (22) déformable par une augmentation de la pression interne dans le contenant en matière plastique (10) est associée au moins à une des géométries partielles de base (34).

7. Contenant en matière plastique selon la revendication 6, **caractérisé en ce que** les géométries fonctionnelles (22) s'étendent au moins en partie entre les géométries partielles de base (34) et les bandes de serrage (36).

8. Outil de moulage pour le moulage par soufflage d'un fond de contenant (14) d'un contenant en matière plastique (10) destiné à recevoir des liquides contenant du gaz selon l'une quelconque des revendications 1 à 7, dans lequel l'outil de moulage (40) présente un premier contour de moule (48) pour l'au moins un centre de fond (18) et un deuxième contour de moule (44) pour l'au moins une géométrie de base (16), dans lequel le deuxième contour de moule (44) s'étend au moins en partie autour du premier contour de moule (48), dans lequel le deuxième contour de moule (44) est disposé plus profondément dans le moule que le premier contour de moule (48), dans lequel l'outil de moulage (40) présente au moins un troisième contour de moule (46) pour mouler la géométrie fonctionnelle (22) déformable du fond de contenant (14) à mouler, dans lequel le troisième contour de moule (46) est disposé au moins en partie entre le premier contour de moule (48) et le deuxième contour de moule (44).

9. Outil de moulage selon la revendication 8, **caractérisé en ce que** le troisième contour de moule (46) s'étend au moins en partie dans une direction périphérique autour du premier contour de moule (48).

10. Outil de moulage selon la revendication 8 ou 9, **caractérisé en ce que** le troisième contour de moule (46) s'étend au moins en partie radialement par rapport au premier contour de moule (48).

11. Outil de moulage selon l'une quelconque des revendications 8 à 10, **caractérisé en ce que** le troisième contour de moule (46) est réalisé en forme de boucle.

12. Outil de moulage selon l'une quelconque des revendications 8 à 11, **caractérisé en ce que** l'outil de moulage (40) présente une pluralité, de préférence cinq, deuxièmes contours de moule (44), dans lequel au moins un troisième contour de moule (46) est associé au moins à un des deuxièmes contours de moule (44).

13. Outil de moulage selon l'une quelconque des revendications 8 à 12, **caractérisé en ce que** les troisièmes contours de moule (46) s'étendent au moins en partie entre les deuxièmes contours de moule (44) et les quatrièmes contours de moule (50) pour des bandes de serrage (36).

14. Dispositif de fabrication de contenants, comprenant au moins une station de moulage par soufflage (54) pour le moulage par soufflage d'un contenant en matière plastique (10), dans lequel la station de moulage par soufflage présente un outil de moulage (40) selon l'une quelconque des revendications 8 à 13.

15. Procédé de fabrication et de remplissage de contenants en matière plastique, dans lequel le procédé (100) présente au moins des étapes suivantes :
- la fabrication (102) d'au moins un contenant en matière plastique selon l'une quelconque des revendications 1 à 7, en particulier avec un dispositif selon la revendication 14, dans lequel le fond de contenant du contenant en matière plastique est dans le premier état ;
- le remplissage (104) du contenant en matière plastique avec un liquide contenant du gaz, dans lequel une pression générée dans le contenant en matière plastique déforme l'au moins une géométrie fonctionnelle et transfère le fond de contenant dans le second état.
